# EUROPEAN PATENT SPECIFICATION

(11) **EP 3 707 692 B1**
(45) Date of publication and mention of the grant of the patent: **13.04.2022**
(21) Application number: 17801821.4
(22) Date of filing: 09.11.2017
(51) Int. Cl.: G09B 19/24

(54) **BOLTED JOINT DEMONSTRATION DEVICE AND METHOD**
VORRICHTUNG UND VERFAHREN ZUR DEMONSTRATION EINER SCHRAUBENVERBINDUNG
DISPOSITIF ET PROCÉDÉ DE PRÉSENTATION DE JOINT BOULONNÉ

(43) Date of publication of application: 16.09.2020
(73) Proprietor: Atlas Copco Industrial Technique AB, 105 23 Stockholm (SE)
(72) Inventor: BENFORD, Jason J., Auburn Hills, Michigan 48326 (US)
(74) Representative: Rogne, Lovisa Maria Birgitta
(86) International application number: PCT/US2017/060847
(87) International publication number: WO 2019/094016

(56) References cited:
- WO-A1-2015/174193
- CN-U- 203 895 039

## Description

### TECHNICAL FIELD

This disclosure relates to physical, three-dimensional devices and methods useful to demonstrate the physical function and operating characteristics of a mechanical bolted joint.

### BACKGROUND

Virtually every multi-component device includes mechanical fasteners to join one component to another. In complex, dynamic-moving devices such as automobiles and aircraft, it is critical that these mechanical joints be designed to readily handle the static and dynamic loads or forces the joint will experience in operation for the life of the product.

Mechanical fastener joints are seemingly easy to design, but are not well understood by engineers and technicians. There are many aspects of joint design to be considered including bolt preload, clamp load, angle tightening, hard/rigid versus soft joints, dynamic loading on bolt preloads, tension and compression stiffness, and conical compression frustum analysis. Conventional joint design teaching materials and aids have been limited to static, 2-dimensional illustrations in textbooks or computer presentations. An example of known teaching material and aids is disclosed in CN203895039U.

It would be beneficial for education and training to have a physical, 3-dimensional, dynamic model to demonstrate mechanical joint design and joint effects or behavior when the force inputs to the joint are varied.

### SUMMARY

Several examples of a bolted joint demonstration device and method for simulating the function of a bolted joint are disclosed. In one example, the device includes a two-part bolt having a preload force scale, a compression member, a stand and weights. A nut is used on the bolt to simulate a clamp load on the joint which causes a preload tension in the bolt. The two-part bolt includes a biasing member which reflects the representative preload on the bolt and displays the preload value on the preload force scale.

A stand and weight(s) are connected to the second part of the bolt to simulate a service load on the joint. By varying the applied weight to the stand, the bolt and preload force scale physically and visually depict the behavior of the joint so trainees and students can see the effect on the joint by varying the physical inputs and gain a better understanding of bolt preload, clamp load, angle tightening, hard/rigid versus soft joints, dynamic loading on bolt preloads, tension and compression stiffness, and conical compression frustum analysis. This greatly aids in the understanding of mechanical bolted joints which can be applied to future joint design, assembly, quality control, and failure inspection and/or analyses.

In another example, one or more different compression members are used to simulate different types of joints, for example hard/rigid joints and soft/compressible joints. This further aids in understanding of joint design and behavior between different types of joints.

In another example, a kit of mechanical bolt design components is provided for demonstration and training purposes. The kit includes the above-described two-part bolt, one or more compression members to simulate different types of joint stiffness, a nut, a stand and several weights to physically simulate a bolted joint design and demonstrate changes in bolted joint effects or behavior when the input forces and conditions to the joint are varied.

These and other aspects of the present disclosure are disclosed in the following detailed description of the embodiments, the appended claims and the accompanying figures.

### BRIEF DESCRIPTION OF THE DRAWINGS

The invention is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a perspective view of one example of a bolted joint demonstration device.
FIG. 2 is a front elevation view of one example of a bolt used with the demonstration device of FIG. 1.
FIG. 3 is a right-side view of the bolt shown in FIG 2.
FIG. 4 is an exploded view of the bolt shown in FIG. 2.
FIG. 5 is a top perspective view of a portion of the bolt shown in FIG. 2.
FIG. 6 is an exploded view of a portion of the bolt shown in FIG. 2.
FIG. 7 is a perspective view of a portion of the bolt shown in FIG. 2 with an example of a biasing member in an elongated position.
FIG. 8 is a schematic exploded view of a portion of the bolt shown in FIG. 2 without the biasing member.
FIG. 9A is a perspective view of an example of a compression member used with the demonstration device shown in FIG. 1.
FIG. 9B is a cross-sectional view taken along line 9B-9B in FIG. 9A.
FIG. 10 is a front elevation view of an alternate example of the compression member shown in FIG. 9A.
FIG. 11 is perspective view of an example of a stand used in the demonstration device of FIG. 1 (shown without supporting a service weight).
FIG. 12 is a top view of an example of a service weight shown in the demonstration device of FIG. 1.
FIG. 13A is a first pictorial example of the demonstration device in FIG. 1 without a bolt preload, without a clamp load, and without a service weight load applied.
FIG. 13B is a second pictorial example of the demonstration device in FIG. 1 without a clamp load, but having a service weight load applied inducing a bolt preload.
FIG. 13C is a third pictorial example of the demonstration device in FIG. 1 with a bolt preload, with a clamp load, and without a service weight load applied.
FIG. 13D is a fourth pictorial example of the demonstration device in FIG. 1 with a bolt preload, a clamp load, and a service weight load applied.
FIG. 13E is a fifth pictorial example of the demonstration device in FIG. 1 with a bolt preload, a clamp load, and an alternate service weight load applied than shown in FIG. 13D.
FIG. 14A is a first pictorial example of an alternate demonstration device shown in FIG. 1 including an alternate compression member, with a bolt preload, with a clamp load, and without a service weight load applied.
FIG. 14B is a second pictorial example of the demonstration device shown in FIG. 14A with an alternate bolt preload, with an alternate clamp load, and with a service weight load applied.
FIG. 15 is a schematic flow chart of an example of a method for simulating and visually, physically demonstrating the effects of varying force inputs on a simulated bolted joint.

### DETAILED DESCRIPTION

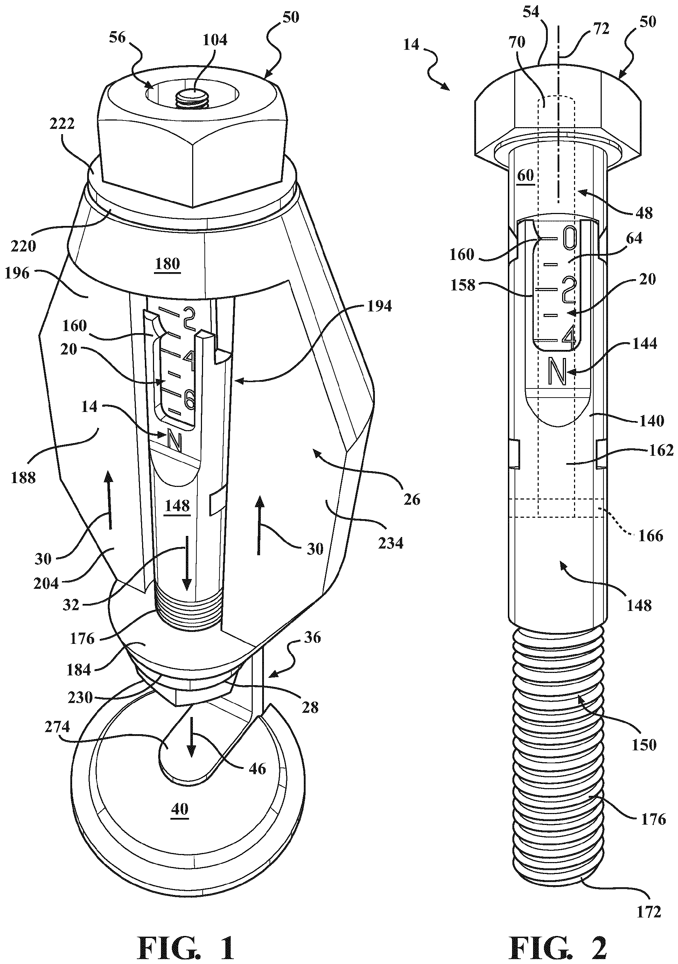

Referring to FIGS. 1-15, examples of a bolted joint demonstration device 10 and method 400/400A are illustrated and discussed below. The device 10 is particularly useful for live, in-person educational demonstrations and training, but device 10 has other uses and applications known by those skilled in the field. In one example, the device 10 provides a 3-dimensional, physical device which simulates a bolted joint and visually demonstrates changes in the bolted joint behavior (or physical effects) when the input forces are conditions are varied. The device 10 also is useful to demonstrate the joint behavior differences when the joint is a hard or rigid joint, and a soft joint (further discussed below).

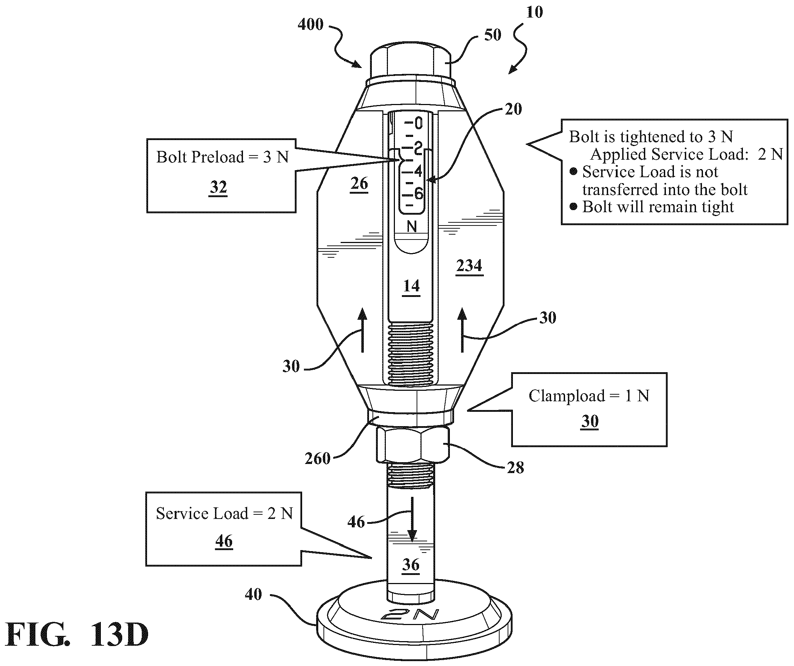

Referring to FIGS. 1 and 13D, an example of the device 10 is shown in use with a hard or rigid compression member (discussed further below). In the example, device 10 includes a bolt 14 including a bolt preload force scale 20, a compression member 26 and a fastener nut 28 threadingly engaged with the bolt 14 as generally shown. As further discussed below, the nut 28 is useful to simulate a clamp load force 30 on the compression member 26 which further simulates a bolt preload force 32 on bolt 14. Exemplary device 10 further includes a stand 36 and selectively applied weights 40 which simulate a service load 46 that is applied to the simulated joint and bolt 14. Changes in the simulated clamp load 30 and service load 46 due to varying input forces applied by the nut 28 and/or weights 40 that change the bolt preload force 32 are visually displayed on the preload scale 20.

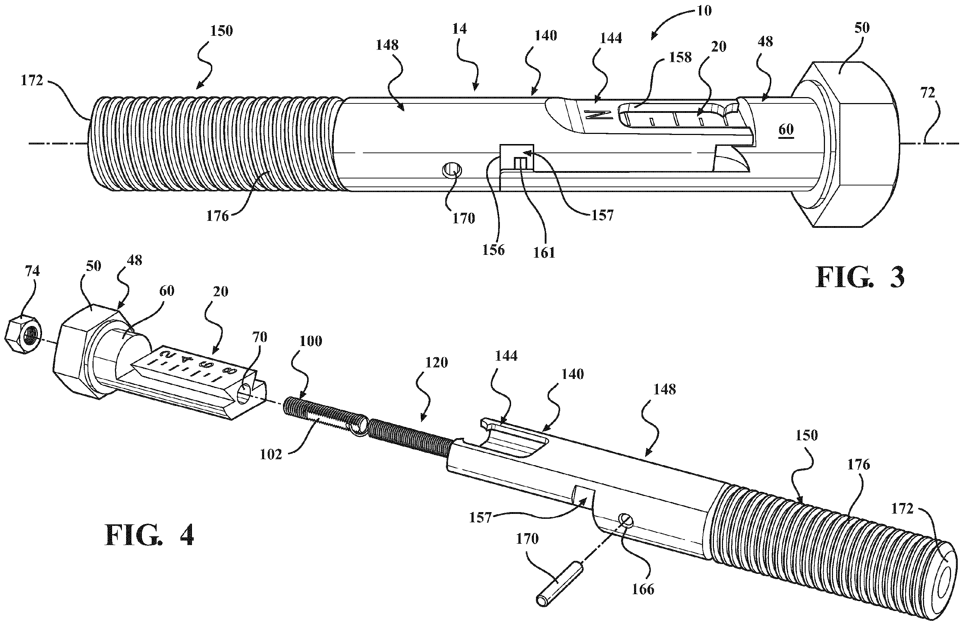

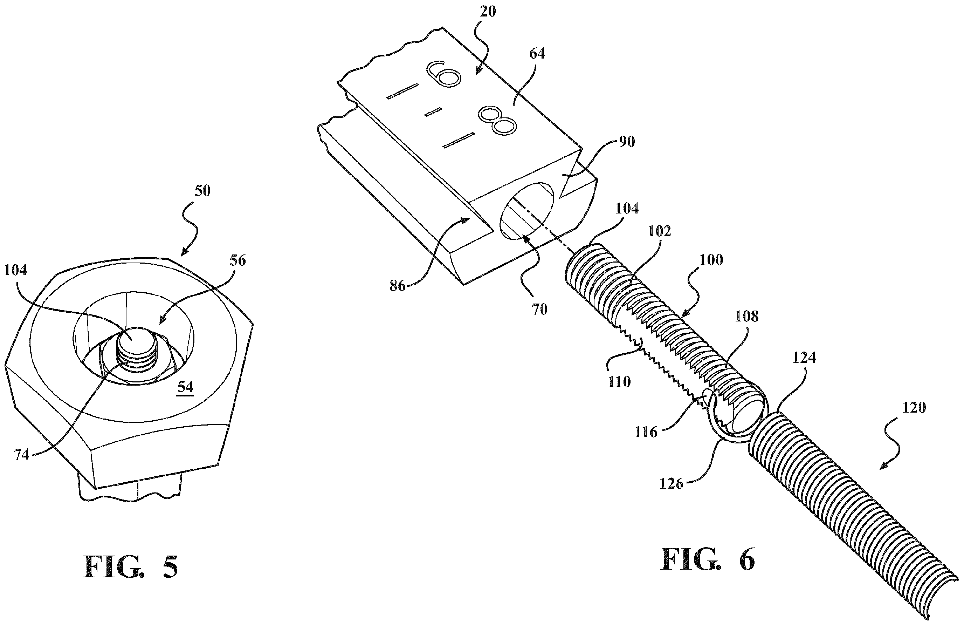

Referring to FIGS. 2 - 5 an example of bolt 14 useful in device 10 is shown. In the example illustrated, bolt 14 includes a two-part design with a biasing member as further discussed below. In the example, bolt 14 includes a bolt first part 48 including a head 50 having a top surface 54 and a recess 56 as best seen in FIG. 5. Referring to FIGS. 2 and 3, bolt first part 48 further includes a shoulder 60 and the preload scale 20 connected to the head 50. Exemplary preload scale 20 includes a front face 64 and calibrated/validated force value markings or indicia 68 as generally shown. In the example, the value indicia 68 is a force value in Newtons (N). It is understood that other markings or indicia, in other measuring systems (for example pounds of force lbf) may be used as known by those skilled in the field.

As best seen in FIGS. 4 and 6, exemplary bolt first part 48 includes a through bore 70 extending through the preload scale 20, shoulder 60 and head 50 in communication with recess 56 along a longitudinal axis 72. Referring to FIGS. 4 and 5, exemplary bolt first part 48 further includes an adjuster nut 74 positioned in head 50 recess 56 as further described below.

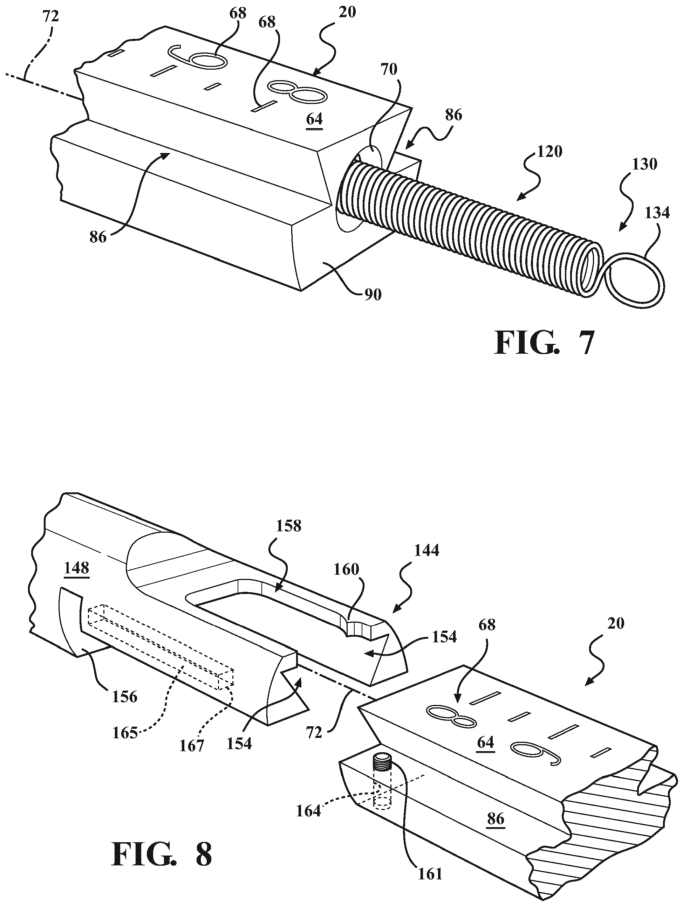

Referring to FIGS 4 and 6-8, bolt first part 48 further includes an angled channel 86 on each side of preload scale 20 parallel to longitudinal axis 72 as best seen in FIGS. 6-8. In the example, each channel 86 is an undercut channel below front face 64 inward toward the through bore 70. In one example, the undercut is a sixty (60) degree angle. In the example angled channels 86, the channels 86 prevent relative rotational movement between the bolt first part 48 and the bolt second part 140 about the longitudinal axis 72. It is understood that angled channel 86 can take other forms, sizes, shapes, configurations, angles and positions on preload scale 20 as known by those skilled in the field. Exemplary bolt first part 48 terminates with a bottom end 90 as best seen in FIGS. 6 and 7.

Referring to FIGS. 4 and 6-7, exemplary device 10 further includes a biasing device 100 including a threaded member 102 and a biasing member 120 further described below. As best seen in FIG. 6, biasing device 100 threaded member 102 includes an elongate threaded rod having a top end 104, a bottom end 108 and mechanical threads along its length. In the example, flats or machined portions 110 are positioned on opposing sides of the threaded member 102. An aperture 116 is positioned toward the bottom end 108 as generally shown.

As best seen in FIG. 5, threaded member 102 top end 104 is threadingly engaged with adjuster nut 74 in head 50 axially extending recess 56. Threaded member 102 is sized to be positioned and axially extend through a portion of the bolt first part 48 through bore 70. It is understood that threaded member 102 can take other forms, sizes, shapes, configurations and materials known by those skilled in the art. It is further understood that the adjustment feature, e.g. the threaded engagement between adjuster nut 74 and threaded member 102 may be of alternate construction and components as known by those skilled in the field.

Referring to FIGS. 4 and 6-7, exemplary biasing device 100 further includes a biasing member 120. In the example, biasing member 120 is a coil tension spring having a top end 124 including a connecting loop 126 and a bottom end 130 including a connecting loop 134 as generally shown. As best seen in FIG. 6, connecting loop 126 is positioned in threaded member 102 aperture 116 securing the biasing member 120 to the threaded member 102. In one example as a tension spring, biasing member 120 has a spring rate of 0.2 Newtons/millimeter (N/mm). It is understood that different spring rates, and different biasing members 120 other than a tension spring, may be used to suit the particular application and use as known by those skilled in the art.

Referring to FIGS. 2 - 4 an example of bolt 14 second part 140 is shown. In the example, second part 148 includes an upper portion 144, a shank portion 148 and a lower portion 150 as generally shown. In the example upper portion 144 as best seen in FIG. 8, upper portion 144 includes channels 154 which are sized and positioned to coordinate with bolt first part 48 channels 86 providing for sliding engagement of the bolt first part 48 relative to the bolt second part 148 as further described below. As best seen in FIGS. 3 and 8, bolt second part 148 includes a wall 156 positioned toward the end of channels 154.

In the example illustrated, coordinating bolt first part channels 86 and bolt second part channels 154 are sized, oriented and respectively positioned to prevent the bolt first part 48 and bolt second part 140 from rotating about longitudinal axis 72 relative to one another. It is understood that other channel formations, configurations and devices can be used to allow relative longitudinal sliding movement between the bolt first part 48 and the bolt second part 140 without permitting relative rotation.

Referring to FIGS. 1, 2 and 8, bolt second part 140 upper portion 144 further includes a window opening (window) 158 and a pointer 160 extending into the window 158. As best seen in FIGS. 1 and 2, window 158 is sized, oriented and positioned to allow visual access or reading of at least a portion of the preload scale 20 front face 64 and value indicia 68. Pointer 160 is positioned and oriented to extend into the window 158 for identification of a particular value indicia 68 as best seen in FIG. 2. Window 158 and pointer 160 can take other forms, shapes, configurations, sizes and orientations as known by those skilled in the art. In one example (not shown), preload scale 20 is a rotary dial indicator with a needle that rotates about an axis to indicate the measured or read the simulated preload force on the bolt 14. In another example (not shown), preload scale 20 is a digital scale and the biasing member 120 is an electronic device, for example a linear transducer, which measures/calculates distance or force and electronically transmits that to the digital scale to display the simulated preload force. Other preload scale 20 and biasing devices 100, including any related and known hardware and software, known by those skilled in the art may be used.

In one example shown in FIG. 8, exemplary bolt 14 includes an axially adjustable stop 161 threadingly positioned in a through bore 164 in the bolt first part 48 as generally shown. In one example, stop 161 is a threaded set screw that is threadedly engaged with the bolt first part 48 to extend about the lower portion of one, or both, of the channels 86 (only one side shown). In the example, bolt second part 140 includes a slot 165 in the underside in lateral alignment (direction perpendicular to the longitudinal axis 72) with the stop 161. Slot 165 is closed at a wall 167 and open into the opening 157. On assembly of the bolt first part 48 to the bolt second part 140, the stop 161 is engaged with the bore 164 such that a portion of the stop 161 extends up into the channel 86 as shown in FIGS 8 and 3.

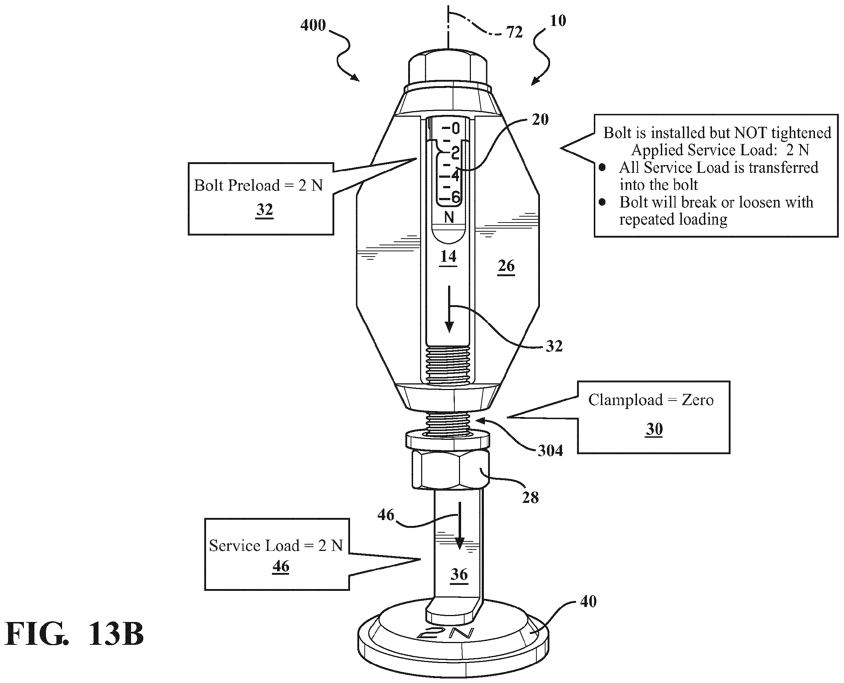

In the example, on movement of the bolt second part 140 relative to the bolt first part 48, for example on application of a weight 40 as shown in FIG. 13B, the exposed portion of the stop 161 slides within slot 165. If too much weight 40 is added, or if nut 28 is engaged too far, stop 161 abuts slot wall 167 to prevent further extension of the bolt second part 140 relative to bolt first part 40 preventing over-extension or damage to the biasing member 120, for example a spring. In one example of bolt 14, a maximum of 7 Newtons (N) of clamp load 30 or bolt preload 32 can be applied before stop 161 abuts slot wall 167 preventing further longitudinal movement of the bolt second part 140. It is understood that different devices for stop 161 and slot 165 can be used to limit the relative movement. It is also understood that bolt 14 may have different maximum clamp 30 and preload 32 load capabilities as known by those skilled in the field.

Referring to FIGS. 4 and 6, bolt second part 140 further includes a through bore 162 axially aligned with bolt first part through bore 70 and a transversely positioned aperture 166 in communication with through bore 162 as best seen in FIG. 2. On insertion of the biasing member 120 into second part 140 through bore 162, a retaining pin 170 is positioned through aperture 166 and biasing member loop 134 to axially connect and secure biasing member 120 to bolt second part 140. In a normal method of operation once assembled as shown in FIGS. 2, 3 and 5, axial movement of the bolt first part 48 relative to the bolt second part 140 is resisted by the biasing device 100 and visually indicated on preload scale 20 as further described below.

Referring to FIGS. 2 and 3, bolt second part 140 further includes a bottom end 172 which included mechanical threads 176 for threading engagement with nut 28 as further described below.

The described and illustrated exemplary bolt first part 48, the bolt second part 140, the biasing device 100 and nut 48 are all made from stainless steel. It is understood that other materials for each respective component may be used to suit the particular application or performance specifications as known by those skilled in the art.

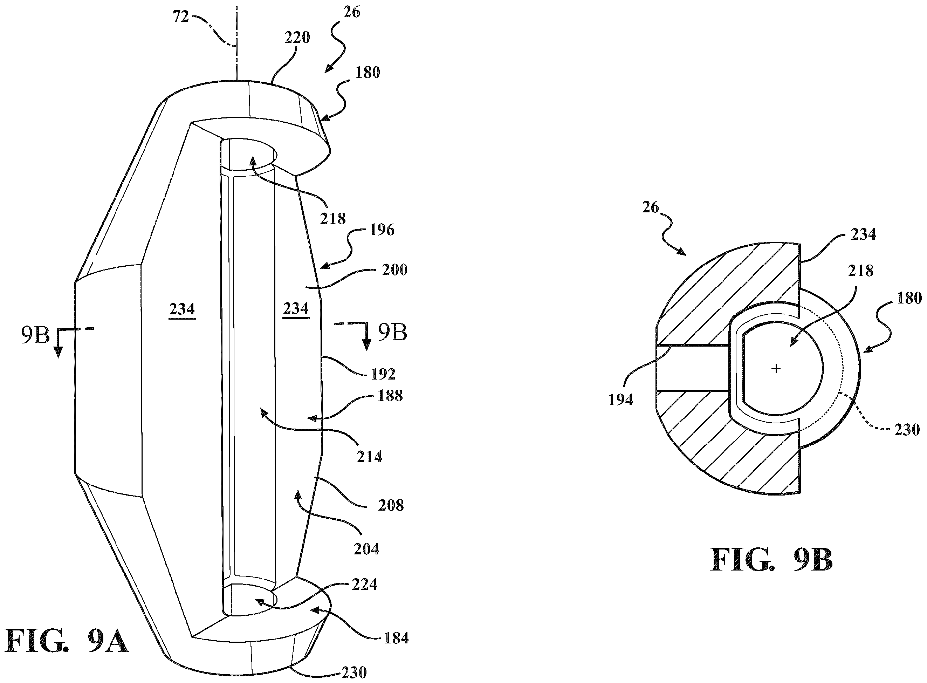

Referring to FIGS. 1, 9A, 9B and 10, examples of a compression member are shown. The exemplary compression member 26 serves to support bolt 14 and simulate a mechanical joint through receipt of a compressive force in a simulated clamp load 30. In the example, compression member is in the form of a frustum having a top 180, a bottom 184, and a central portion 188 having vertical straight sides 192 and a rearward extending aperture 194 as best seen in FIG. 9B. The exemplary compression member further includes an upper portion 196 having angled sides 200 and a lower portion 204 having angled sides 208 as generally shown. Referring to FIGS. 1 and 9A, exemplary compression member 26 includes a longitudinal center channel 214 positioned along the longitudinal axis 72.

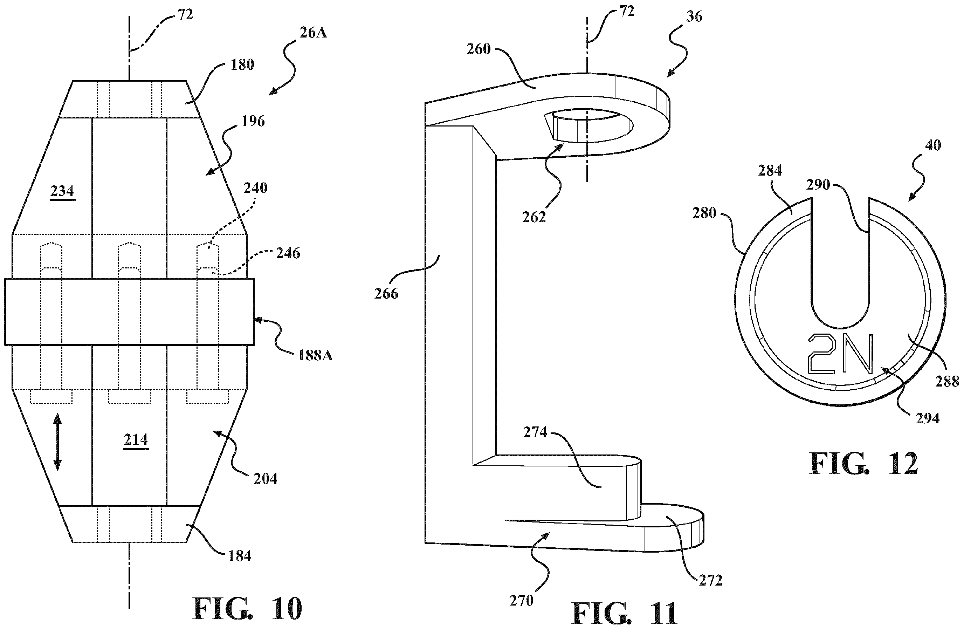

As best seen in FIGS. 1 and 9A, exemplary compression member 26 top 180 includes a through bore 218 and a top surface 220. In the example device 10 shown in FIG. 1, a mechanical washer 222 is positioned between compression member top surface 220 and bolt head 50 as generally shown. Washer 222 serves to improve the distribution of the clamp load 30 and/or prevent head 50 from marring or damaging top surface 220 of the compression member. Washer 222 is particularly useful when the compression member is a soft compression member, for example, alternate compression member 26A shown in FIG. 10 and described further below. It is understood that devices other than the washer 222 may be used, or that a washer 222 may not be used, with device 10. In the exemplary compression member 26, bottom 184 also includes a through bore 224 extending through a bottom surface 230.

Referring to FIGS 1 and 9A, compression member further includes a front face 234 as generally shown. In one example of a hard or rigid compression member 26 used to simulate hard or rigid mechanical joint materials, compression member 26 is made from polycarbonate. It is understood that other materials may be used for compression member 26 to simulate a hard or rigid joint as known by those skilled in the field.

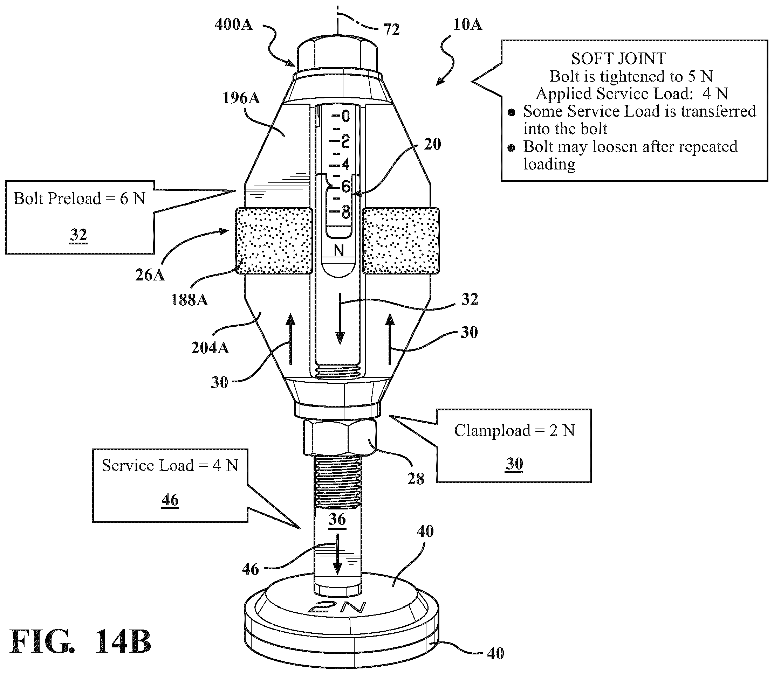

Referring to FIG. 10 and 14B, an alternate example of a compression member 26A used to simulate soft or semi-compressible joint materials is shown. In the example, identical or substantially similar components previously described for compression member 26 include the same number and are not re-described here. In the example compression member 26A, the top 180, bottom 184, upper portion 196 and lower portion 204 are similarly constructed in a frustum configuration, but are divided into two separate and independent pieces. In the example, the upper portion 196 and lower portion 204 are also made from a hard or rigid material such as polycarbonate as described for compression member 26. It is understood that other materials may be used to simulate the desired joint materials.

In the example alternate compression member 26A, the central portion, or a part of the central portion 188A, is also a separate and independent piece from the upper 196 and lower 204 portions and is made from a soft or semi-compressible material to simulate a soft or compressible joint materials bolted together in the field of industry. In one example, the central portion 188A material is a 1.25 inch (in.) thick layer of an open cell polyurethane foam having a density of 1 pound per cubic foot (lbs./cu. ft.). It is understood that other soft or semi-compressible materials may be used as known by those skilled in the art.

In the example, center portion 188A is positioned between the upper 196 and lower 204 portions as generally shown. In one example, three elongate bores 240 positioned radially about longitudinal axis 72 and center channel 214 are made upward through the lower portion 204, through the central portion 188A and into the upper portion 196 as generally shown. In one example, locating bolts 246 are positioned upwardly through the lower portion 204, the central portion 188A and threadingly secured into coordinating threads in the upper portion196 as generally shown. The exemplary bolts 246 include long shoulders which, on application of a clamp load 30 and vertical compression of soft central portion 188A, allow for free vertical movement of the central portion 188A and the lower portion 204 along the longitudinal axis 72 while preventing horizontal or radial movement of the upper portion 196, the central portion 188A and the lower portion 204 relative to one another.

In an alternate example not shown, bolts 246 may take the form of pins that are positioned in interior, closed bores in the upper 196, central 188A, and lower 204 portions. In the example, the pins similarly position the respective portions relative to one another and still allow for compression of central portion 188A along the longitudinal axis as generally described above.

It is understood that alternate compressible members 26 and 26A may be of different sizes, shapes, forms, configurations, and materials from those described and illustrated for the specific application or performance requirements.

Referring to FIGS 1 and 11, an example of a stand 36 for use in applying a simulated service load 46 through weights 40 on device 10 is shown. In the example, stand 36 includes a mounting plate 260 having an aperture 263 as generally shown. As best seen in FIGS. 1 and 13D, mounting plate 260 and aperture 262 are sized an oriented to be positioned between the compression member 26 bottom surface 23 and nut 28 with the bolt second part threaded portion positioned through the aperture 262.

As best seen in FIG. 11, stand 36 further includes a bracket 266 connected to the mounting plate and a base 270 connected to the bracket 266 as generally shown. In the example, base 270 includes a support surface 272 for abuttingly engaging and supporting one or more weights 40. In one example, the base further includes a retainer formation 274 which serves to receive, position and assist in retaining the weights 40 on the stand 36 and supporting surface 272 as best seen in FIGS. 1 and 13D. As generally shown, stand 36 is configured to position the weights 40 such that a center of gravity of the weights 40 are substantially aligned with longitudinal axis 72 so as to simulate an axial service load on bolt 14 along the longitudinal axis 72. A suitable material for stand 36 is stainless steel, although other materials can be used as known by those skilled in the art. Stand 36 can take other forms, configurations, sizes, shapes, engagement structures and methods with bolt 14 and weight 40 as further described below.

Referring to FIG. 12, an example of a weight 40 used to engage stand 36 and apply a simulated service load on bolt 14 and device 10 is shown. In the example, each weight 40 is shaped as a circular disk having a radial perimeter 280, a lower surface 284 and an upper surface 288. In the example weight 40, weight 40 includes an open slot 290 which is sized and oriented to position the stand support retainer 274 through the slot thereby preventing dislodging or sliding of the weight 40 relative to the stand except in the direction of the slot. Further, the underside of the upper surface (not shown) abuttingly engages the stand support surface 272 to vertically support the weight 40 when installed on stand 36 as generally shown in FIGS. 1 and 13D. In the example, weights 40 are designed to easily vertically stack and nest with one another to substantially secure the weights 40 to one another without additional fasteners or structures. Weights 40 can take other sizes, shapes, configurations, weights, and stacking or nesting methods as known by those skilled in the art.

The exemplary weight 40 is weighted to coordinate with the biasing member 120, for example the tension spring, and the bolt preload scale 20 value indicia 68 described above and illustrated in FIGS. 1 and 6 - 8. In the example illustrated in FIG. 12, each weight 40 weights two (2) Newtons (N) shown by weight indicia 294. In the example best seen in FIG. 13B and described further below, on placement of one weight 40 (2 N) on stand 36 with no initial clamp load 30, biasing member 120 will produce a measurement or reading on bolt preload scale 20 of two (2) Newtons (N). In an example not shown, on the application of an additional weight 40, the bolt preload scale will measure or read 4 N. It is understood that weights 40, biasing member 120 and preload scale indicia 294 may take other forms and values to represent accurate simulated forces and readings for the bolted joint simulator 10 as known by those skilled in the art. It is further understood that stand 36 and weights 40 can take different, sizes, shapes, configurations, materials, and weight mounting supporting and engagement structures and methods, as known by those skilled in the art.

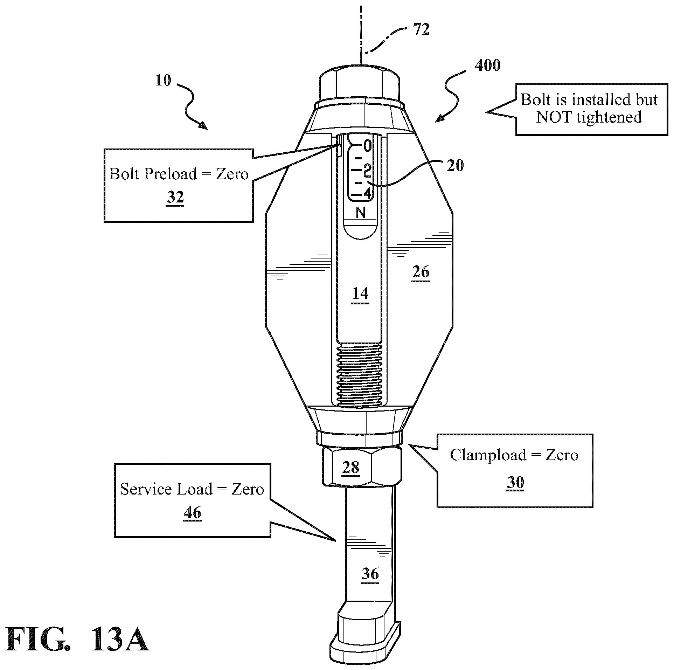

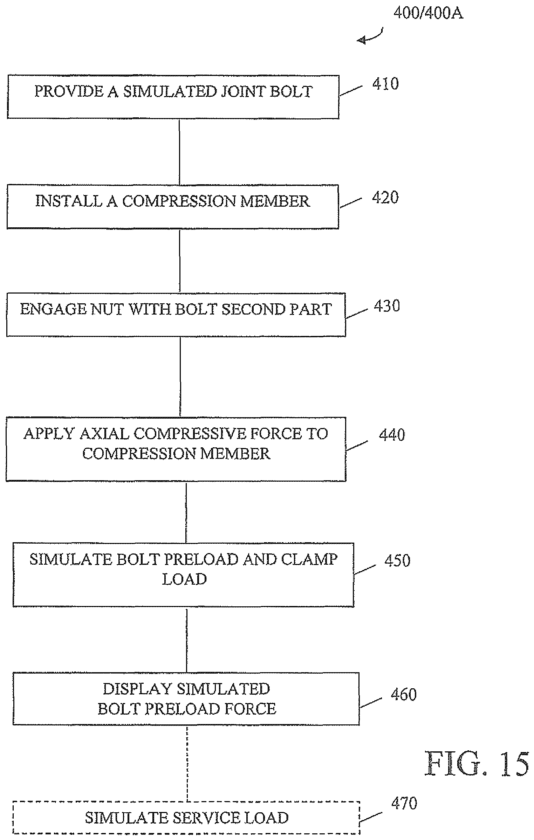

Referring to FIGS. 13A-15, several examples of methods 400 for simulating, and visibly and physically demonstrating in 3-dimensional form, bolted joint behavior or effects when the input forces or conditions are varied are illustrated. Referring to FIG. 15, the method 400 is illustrated schematically. In the exemplary method of simulating and physically and visually demonstrating the effects of varying force inputs on a bolted joint simulator device 10 for exemplary educational training, a first step 410 includes providing a bolt 14 previously described having a bolt first part 48 having a head 50 and a bolt second part 140 which axially and linearly moves relative to bolt first part 48 as previously described. As described, the bolt 14 includes a bolt preload force scale 20.

In an exemplary second step 420 a compression member 26/26A is installed in abutting engagement with the bolt 14 head 50. In a third exemplary step 430, a nut 28 is threadibly engaged with the bolt second part 140 threaded portion 176. In an example where device 10 is used to simply simulate and display a bolt preload and clamp load, nut 28 is tightened to apply a compressive axial force on the compression member 26/26A in step 440.

In the FIG. 15 example method 400, on application of the axial compression force by the nut 28 on the compression member 26/26A, a bolt preload force 32 and a bolt clamp load 30 are simulated as described above and schematically illustrated in step 450. As described above, in step 460, the simulated bolt preload 32 is visually displayed and/or demonstrated through preload scale 20. In an alternate step shown in step 470, for example where it is desired to demonstrate the effects of applying a service load 46, stand 36 is used to apply a service load 46 on the bolt as described above. It is understood that method 400/400A may include additional, as well as alternate steps, and in alternate order as understood by those skilled in the art.

Referring to FIGS. 13A-13E, in one example of a hard or rigid joint as best shown in FIG. 13D, the previously described device 10 is used. The previously described device 10 includes, bolt 14, bolt preload scale 20, hard or rigid compression member 26, stand 36, one or more weights 40, and a nut 28. Bolt 14 includes a biasing device 100 (not shown), including, for example, biasing member 120 in the form of a tension spring as previously described.

Referring to FIG. 13A, device 10 is assembled as generally shown with stand 36 engaged with bolt 14 through nut 28 threaded onto bolt second part 140 with no weights 40 positioned on stand 36 support 272. In the example, nut 28 is in abutting contact with stand 36 mounting plate 260 which is in abutting engagement with compression member 26 bottom surface 230. In the example, no torque is applied to nut 28 and no clamp load 30 is applied to compression member 26.

In one optional step as best seen in FIG. 5, adjusting nut 74 is rotated clockwise or counterclockwise to adjust the axial tension of biasing member 120 and/or calibrate the bolt 14 biasing device 100 so that the bolt second part indicator 160 points or visually reads zero (0) on the preload scale value indicia 68. Adjusting nut 74 can also be turned to remove any "slack" or "play" in biasing device 100 so that on application of a weight 40, the biasing member 120 is immediately placed in tension or other biasing position depending on the biasing member 120 used in device 10. In the position as shown in FIG. 13A, the simulated clamp load 30 is zero (0), the simulated bolt preload force 32 is zero (0), and the simulated service load 46 is zero (0). In this state of device 10 and method 400, the bolt preload scale measures or reads zero (0).

Referring to FIG. 13B, a method or step of visually and physically demonstrating the effects on (or behavior of) a bolted joint through simulation of a service load 46, without application of a clamp load 30, is shown. In the example, nut 28 is initially threaded onto bolt 14 lower portion 150 and positioned in abutting engagement with the stand 36 mounting plate 260 as described and illustrated in FIG. 13A. A single weight 40, for example weighing two (2) Newtons (N) is positioned on stand base 270 and wholly supported by support surface 272. As illustrated, without prior application of a simulated clamp load 30, the device 10 and method 400 visually and physically demonstrates that a gap 304 forms between stand mounting plate 260 and the compression member bottom surface 230 due to axial movement of the bolt second part 140 relative to the bolt first part 48 through forced axial expansion (or lengthening) of biasing member 120. As illustrated, the full simulated service load 46 of two (2) Newtons (N) is physically and visually demonstrated to be transferred to bolt 14 as would occur in an actual bolt in the field (not shown). This simulated condition advises and educates as to a poor bolted joint design condition.

In the FIG. 13B example, and exemplary device 10 and method 400, the biasing device 100, and biasing member 120 in the exemplary form of a tension spring, serves to physically and visually simulate the linear, elastic axial extension of an actual mechanical bolt (not shown) as would occur in the field. The device 10 and method 400 further physically and visually simulates the effects (or behavior) on the simulated clamp load 30 and bolt preload 32 through changing of the applied service load 46 as described above and through further examples discussed below.

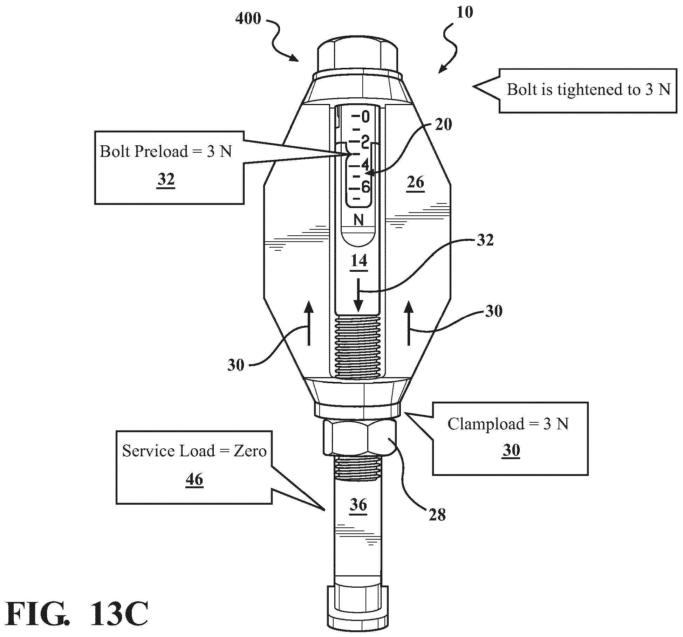

Referring to FIG. 13C, a method or step of visually and physically demonstrating the effects on (or behavior of) a bolted joint through simulation of a clamp load 30, without application of a service load 46, is shown. In the example, nut 28 is rotated (or tightened) about longitudinal axis 72 (clockwise as viewed from the bottom of bolt 14) generating three (3) Newtons (N) of clamp load 30 force and bolt preload 32 as demonstrated by bolt preload scale 20 (reading 3 N). As discussed for FIG. 13B, device 10 bolt 14 simulates a clamp load 30 (and simultaneously bolt preload 32) by simulating the elastic axial elongation of bolt 14. In the illustrated example, as nut 28 is prevented from upward axial movement by hard/rigid compression member 26, bolt second part 140 axially moves downward thereby axially extending or lengthening biasing member 120 and displaying the simulated bolt preload 32 (3 N) on the bolt preload scale 20.

Referring to FIG. 13D, a method or step of visually and physically demonstrating the effects on (or behavior of) a bolted joint through simulation of a clamp load 30, a bolt preload 32, and a service load 46, is shown. In the example, nut 28 is rotated (or tightened) about longitudinal axis 72 generating a simulated initial bolt preload 32 of three (3) Newtons (N) and simulation of an initial clamp load 30 of three (3) Newtons (N). On application of a single weight 40 on stand base 270 simulating a two (2) Newton (N) service load 46, the resultant clamp load is reduced to one (1) Newton (N). As the simulated service load 46 (2 N) is less than the initially applied clamp load 30 (3 N), the exemplary device 10 and method 400 visually and physically displays that the bolt 14 preload 32 remains at three (3) Newtons (N) thereby advising and educating of a properly designed bolted joint for the applied service load 46.

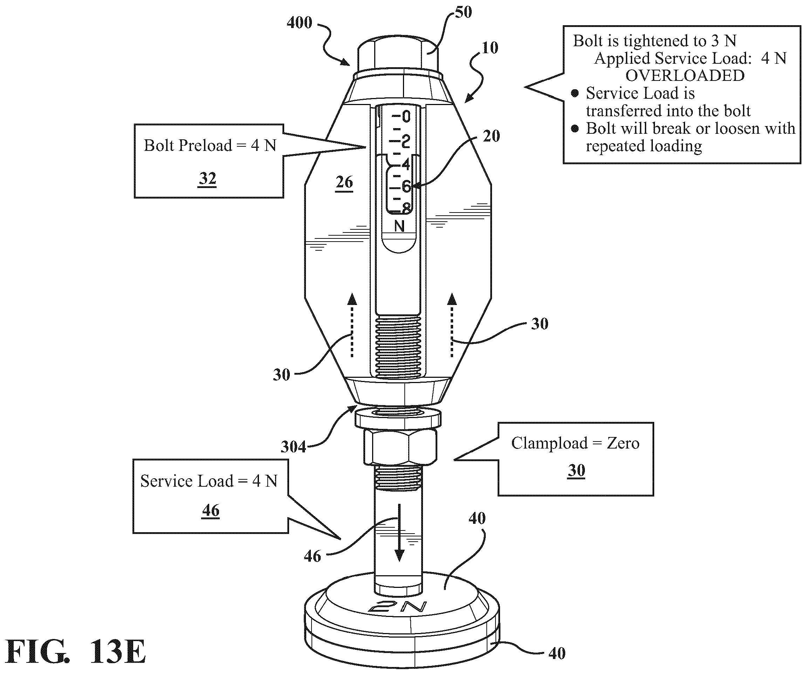

Referring to FIG. 13E, a method or step of visually and physically demonstrating the effects on (or behavior of) a bolted joint through simulation of a clamp load 30, a bolt preload 32, and a service load 46, is shown. In the illustrated example, the example shown in FIG. 13D is replicated with the exception that the applied simulated service load 46 is increased to four (4) Newtons (N) through application of a second weight 40 positioned atop of the first weight 40 used in FIG. 13D. In the example, as the simulated service load 46 (4 N) exceeds the initial clamp load 30 (3 N, shown in dashed line), a gap 304 is generated between the stand mounting plate 260 and the compression member bottom surface 230 reducing the clamp load 30 to zero (0). With zero (0) clamp load, the device 10 and method 400 physically and visually displays that the service load 46 is transferred to the bolt 14 in a bolt preload 32 equal to the service load 46 (4 N) as displayed on the bolt preload scale 20. The device 10 and method 400 physically and visually display a poor bolted joint design and/or service loading condition.

It is understood that different simulated clamp loads 30, bolt preloads 32, and/or service loads 46 conditions can be used on device 10, and/or through method 400, then that illustrated and described for the hard/rigid bolted joint in FIGS. 13A - 13E.

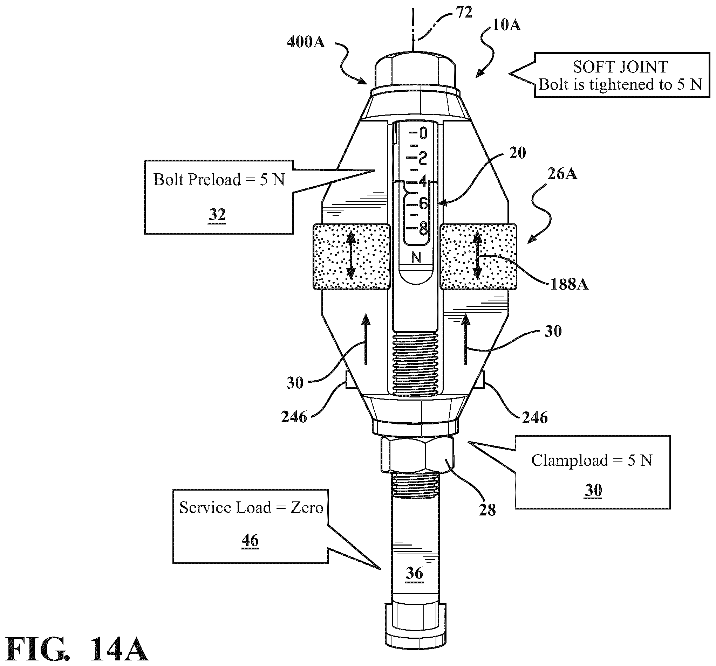

Referring to FIGS. 14A and 14B, examples of an alternate device 10A and method 400A in the form of a soft or semi-compressible joint and/or compression member 26A are shown. In joint design, the stiffness or resistance to expansion or compression is important to consider. Materials with high resistance to expansion/stretching or compression have a higher stiffness than those that are easily expanded or compressed. In bolted joint design, it is preferred the clamped material have a high stiffness (rigid, low/axial compression) and the bolt to have a low stiffness (capable of being axially stretched to apply a clamp load over a wider range of expansion). It is advantageous that the inventive bolted joint simulator device 10/10A and methods 400/400A alternately use a rigid/high stiffness compression member 26 and an alternate low stiffness/soft/semi-compressible compression member 26A to visually and physically simulate and demonstrate the effects (or behavior) of the bolted joint with the clamped material having varying stiffness under varying input forces (for example bolt preload 32, clamp load 30, and/or service load 46). In the alternate exemplary device 10A, the only difference from the previously described device 10 is that compression member 26 takes the form of alternate soft/semi-compressible compression member described and illustrated as 26A and FIG. 10 above.

Referring to FIG. 14A, a method or step 400A of visually and physically demonstrating the effects on (or behavior of) a soft/semi-compressible bolted joint through simulation of a clamp load 30, a bolt preload 32, but without a service load 46, is shown. In the example, nut 28 is rotated (or tightened) about longitudinal axis 72 to simulate a five (5) Newton (N) bolt clamp load 30 and bolt preload 32 as generally shown. The compression member 26A central portion 188A is slightly compressed in the axial direction along longitudinal axis 72. As previously described above for FIG. 10, pins 246 maintain the position of the central portion 188A relative to the compression member upper portion 196 and lower portion 204.

Referring to FIG. 14B example, the same device 10A and method of 14A of FIG. 14A is applied with the exception that a two (2) weights 40 are applied to stand base 270 to simulate a service load 46 of four (4) Newtons (N). Due in part to the bolt 14, including the biasing device 100 and soft/semi-compressible compression member 26A as previously described, device 10A physically and visually simulates and demonstrates a resulting bolt preload 32 of six (6) Newtons (N) on bolt preload scale 20. Due to the soft/semi-compressible compression member 26A, the device 10A visually and physically demonstrates that a portion of the applied service load 46 is effectively transferred to the bolt 14 although a positive clamp load 30 value (clamp load 30 changing from 5 N to 2 N) is maintained by the joint (the bolt preload scale 20 reading changing from five (5) Newtons (N) to six (6) Newtons (N) on application of the simulated two weights 40 service load 46. The device 10A and method 400A physically and visually display the different effects (or behaviors) between hard/rigid and soft/semi-compressible joints under different preload and service load conditions.

It is understood that different simulated clamp loads 30, bolt preloads 32, and/or service loads 46 conditions can be used on device 10A, and/or through method 400A, then that illustrated for the soft/semi-compressible bolted joint than illustrated in FIGS. 14A-14B.

As best seen in the alternate examples of hard/rigid 26 and soft/semi-compressible 26A compression members in FIGS 13A-13E and 14A and 14B, the inventive device and alternate components of devices 10 and 10A may be in the form of a demonstration of training kit or package. In the example, alternate compression member 26A may be supplied in addition to hard/rigid compression member 26 so training and/or educational instruction on both hard/rigid or soft/semi-compressible joints is possible with a single component/demonstration kit. The exemplary kit can further include several weights 40 to vary the simulated service load 46. In an alternate example, different bolts 14 may be used, for example having different bolt preload scales 20 to simulate and demonstrate different bolted joints. Other components and variations/combination of components in the described kit may be used as known by those skilled in the art.

While the invention has been described in connection with certain embodiments, it is to be understood that the invention is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A bolted joint simulation device (10, 10A) for use in demonstrating the effects of varying conditions on a bolted joint, the device comprising:
a bolt (14) having a longitudinal axis (72) comprising:
a bolt first part (48) having a head (50);
a bolt preload scale (20) having bolt preload force value indicia (68), the bolt preload scale operable to display a simulated preload force (32) on the bolt;
a bolt second part (140) having a top end (144), a bottom end (172), and threaded portion (176) adjacent the bottom end, the bolt second part engaged with the bolt first part and axially moveable relative to the bolt first part along the longitudinal axis; and
a biasing device (100) connected to the bolt first part and the bolt second part, wherein on relative axial movement of the bolt first part and the bolt second part, the value of the preload force on the bolt displayed on the preload scale changes value;
a compression member (26, 26A) positioned between the bolt first part head and the bolt second part bottom end;
a nut (28) threadingly engaged with the bolt second part threaded portion, the nut operable to selectively generate the relative axial movement between the bolt first part and the bolt second part to simulate the bolt preload force and apply an axial force to the compression member along the longitudinal axis to simulate a clamp load (30) on the compression member;
a stand (36) positioned in communication with the bolt between the compression member and the nut; and
a weight (40) selectively engaged with the stand operable to simulate a service load (46) on the bolt.

2. The device of claim 1 wherein the bolt preload scale (20) further comprises:
a front face (64) positioned on the bolt first part, the front face having the bolt preload force value indicia;
a window opening (158) defined by the bolt second part, the window opening operable to frame a portion of the preload force value indicia; and
a pointer (160) connected to the bolt second part and positioned in the window opening, the pointer operable to identify a present simulated preload force value (32) on the bolt preload scale force value indicia.

3. The device of any of claims 1 through 2 wherein the biasing device further comprises biasing member (120), the biasing member comprising a tension spring having a first end (124) and a second end (130), the tension spring second end connected to the bolt second part.

4. The device of claim 3 wherein the tension spring (120) comprises a spring rate of 0.2 Newtons/millimeter (N/mm).

5. The device of any of claims 3 through 4 wherein the biasing device further comprises an elongate threaded member (102) having a first end (104) and a second end (108), the threaded member first end engaged with the bolt first part and the second end connected to the spring first end, the threaded member operable to selectively adjust an axial tension of the tension spring along the longitudinal axis.

6. The device of claim 5 wherein the bolt first part defines an axial through bore (70) along the longitudinal axis from a bottom end (90) through the head top surface (54) and the bolt second part defines an axial bore (162) positioned along the longitudinal axis aligned with the bolt first part axial through bore, wherein the elongate threaded member is positioned in the bolt first part axial through bore and the tension spring is positioned in the bolt second part axial bore and a portion of the bolt first part axial through bore.

7. The device of claim 6 wherein the bolt first part head (50) defines an axially extending recess (56) through a top surface of the bolt in communication with the bolt first part axial through bore, wherein the elongate threaded member extends into the head axial recess and threadingly engages an adjuster nut (74), the adjuster nut operable to adjust the axial tension of the tension spring along the longitudinal axis.

8. The device of any of claims 1 through 8 wherein the bolt first part and the bolt second part each further comprise an angled channel (86) positioned parallel to the longitudinal axis, the respective angled channels operable to engage the bolt first part to the bolt second part and permit sliding movement between the bolt first part and the bolt second part along the longitudinal axis and prevent relative rotational movement about the longitudinal axis.

9. The device of any of claims 1 through 8 wherein the compression member (26, 26A) comprises a frustum configuration having an upper portion (180, 196), a central portion (188, 188A) and a lower portion (184, 204), at least the upper portion and the lower portion manufactured from a hard and rigid material.

10. The device of claim 9 wherein the compression member central portion (188A) comprises a soft semi-compressible material.

11. The device of any of claims 1 through 10 wherein the stand (36) further comprises:
a mounting plate (260) positioned coaxially around the bolt second portion threaded member between the compression member and the nut;
a bracket (266) connected to the mounting plate and extending downwardly beyond the bolt second portion bottom end;
a base (270) connected to the bracket having a support surface, the support surface (272) operable to support and position the weight along the longitudinal axis to simulate the service load.

12. The device of claim 11 wherein the stand base further comprises a retainer (274) axially extending upward toward the nut and the weight further comprising an open slot (290) operable to receive the base retainer to substantially prevent easy displacement of the weight from the support surface.

13. A method (400, 400A) for simulating and physically and visually demonstrating the effects of varying force inputs on a bolted joint simulator device according to claim 1 for educational training, the method comprising:
providing a bolt (14) having a bolt first part (48) including a head (50), a bolt second part (140) axially movable relative to the bolt first part along a longitudinal axis (72), and a bolt preload scale (20);
installing a compression member (26, 26A) in abutting engagement with the bolt first part head;
threadibly engaging a nut (28) with the bolt second part;
applying an axial compressive force by the nut to the compression member thereby axially displacing the bolt second part relative to the bolt first part along the longitudinal axis;
simulating a bolt preload force (32) and a clamp load force (30) through the application of the nut axial compressive force; and
visually displaying (460, 20) the simulated bolt preload force on the bolt preload scale.

14. The method of claim 13 wherein the step of simulating a bolt preload force and a clamp load force further comprises:
applying a resistive axial force against the axial movement of the bolt second part relative to the first part along the longitudinal axis through connecting a biasing device (100) to the bolt first part and the bolt second part.

15. The method of any of claims 13 through 14 further comprising the steps of:
installing a stand (36) between the compression member and the nut in communication with the bolt;
simulating a service load (46) on the bolt through selected engagement of a weight (40) to the stand, the bolt preload scale displaying changes to the bolt preload force on the bolt as a result of application of the simulated service load.

16. The method of claim 15 further comprising the step of visually displaying when the clamp load is at a value of zero (0) force through generating an axial spatial gap (304) between the stand and the compression member.

17. The method of any of claims 13 - 16 wherein the step of installing a compression member further comprises the step of installing one of a hard and rigid compression member (26) or a soft semi-compressible compression member (26A).

## Patentansprüche

1. Verschraubungssimulationsvorrichtung (10, 10A) zur Verwendung bei einem Demonstrieren der Auswirkungen variierender Bedingungen auf eine Verschraubung, wobei die Vorrichtung Folgendes umfasst:
eine Schraube (14), die eine Längsachse (72) aufweist, die Folgendes umfasst:
einen ersten Teil (48) der Schraube, der einen Kopf (50) aufweist;
eine Schraubenvorlastskala (20), die Schraubenvorlastkraftwertzeichen (68) aufweist, wobei die Schraubenvorlastskala betriebsfähig ist, um eine simulierte Vorlastkraft (32) auf die Schraube anzuzeigen;
einen zweiten Teil (140) der Schraube, der ein oberes Ende (144), ein bodenseitiges Ende (172) und einen Gewindeabschnitt (176) angrenzend an das bodenseitige Ende aufweist, wobei der zweite Teil der Schraube mit dem ersten Teil der Schraube in Eingriff steht und relativ zu dem ersten Teil der Schraube entlang der Längsachse axial bewegbar ist; und
eine Vorspannvorrichtung (100), die mit dem ersten Teil der Schraube und dem zweiten Teil der Schraube verbunden ist, wobei bei relativer axialer Bewegung des ersten Teils der Schraube und des zweiten Teils der Schraube der Wert der Vorlastkraft auf die Schraube, die auf der Vorlastskala angezeigt wird, einen Wert ändert;
ein Kompressionselement (26, 26A), das zwischen dem Kopf des ersten Teils der Schraube und dem bodenseitigen Ende des zweiten Teils der Schraube angeordnet ist;
eine Mutter (28), die in Gewindeeingriff mit dem Gewindeabschnitt des zweiten Teils der Schraube steht, wobei die Mutter betriebsfähig ist, um die relative axiale Bewegung zwischen dem ersten Teil der Schraube und dem zweiten Teil der Schraube wahlweise zu erzeugen, um die Schraubenvorlastkraft zu simulieren und eine axiale Kraft auf das Kompressionselement entlang der Längsachse auszuüben, um eine Klemmlast (30) auf das Kompressionselement zu simulieren;
einen Ständer (36), der in Kommunikation mit der Schraube zwischen dem Kompressionselement und der Mutter angeordnet ist; und
ein Gewicht (40), das mit dem Ständer wahlweise in Eingriff steht, das betriebsfähig ist, um eine Gebrauchslast (46) auf die Schraube zu simulieren.

2. Vorrichtung nach Anspruch 1, wobei die Schraubenvorlastskala (20) ferner Folgendes umfasst:
eine Vorderfläche (64), die auf dem ersten Teil der Schraube positioniert ist, wobei die Vorderfläche die Schraubenvorlastkraftwertzeichen aufweist;
eine Fensteröffnung (158), die durch den zweiten Teil der Schraube definiert ist, wobei die Fensteröffnung betriebsfähig ist, um einen Abschnitt der Vorlastkraftwertzeichen einzurahmen; und
einen Zeiger (160), der mit dem zweiten Teil der Schraube verbunden und in der Fensteröffnung positioniert ist, wobei der Zeiger betriebsfähig ist, um einen gegenwärtigen simulierten Vorlastkraftwert (32) auf den Schraubenvorlastskalakraftwertzeichen zu identifizieren.

3. Vorrichtung nach einem der Ansprüche 1 bis 2, wobei die Vorspannvorrichtung ferner ein Vorspannelement (120) umfasst, wobei das Vorspannelement eine Spannfeder umfasst, die ein erstes Ende (124) und ein zweites Ende (130) aufweist, wobei das zweite Ende der Spannfeder mit dem zweiten Teil der Schraube verbunden ist.

4. Vorrichtung nach Anspruch 3, wobei die Spannfeder (120) eine Federrate von 0,2 Newton/Millimeter (N/mm) umfasst.

5. Vorrichtung nach einem der Ansprüche 3 bis 4, wobei die Vorspannvorrichtung ferner ein längliches Gewindeelement (102) umfasst, das ein erstes Ende (104) und ein zweites Ende (108) aufweist, wobei das erste Ende des Gewindeelements mit dem ersten Teil der Schraube in Eingriff steht und das zweite Ende mit dem ersten Ende der Feder verbunden ist, wobei das Gewindeelement betriebsfähig ist, um eine axiale Spannung der Spannfeder entlang der Längsachse wahlweise einzustellen.

6. Vorrichtung nach Anspruch 5, wobei der erste Teil der Schraube eine axiale Durchgangsbohrung (70) entlang der Längsachse von einem bodenseitigen Ende (90) durch die obere Oberfläche (54) des Kopfs definiert und der zweite Teil der Schraube eine axiale Bohrung (162) definiert, die entlang der Längsachse positioniert ist, die an der axialen Durchgangsbohrung des ersten Teils der Schraube ausgerichtet ist, wobei das längliche Gewindeelement in der axialen Durchgangsbohrung des ersten Teils der Schraube positioniert ist und die Spannfeder in der axialen Bohrung des zweiten Teils der Schraube und einem Abschnitt der axialen Durchgangsbohrung des ersten Teils der Schraube positioniert ist.

7. Vorrichtung nach Anspruch 6, wobei der Kopf (50) des ersten Teils der Schraube eine sich axial erstreckende Aussparung (56) durch eine obere Oberfläche der Schraube definiert, die mit der axialen Durchgangsbohrung des ersten Teils der Schraube in Kommunikation steht, wobei sich das längliche Gewindeelement in die axiale Aussparung des Kopfs erstreckt und eine Einstellmutter (74) in Gewindeeingriff nimmt, wobei die Einstellmutter betriebsfähig ist, um die axiale Spannung der Spannfeder entlang der Längsachse einzustellen.

8. Vorrichtung nach einem der Ansprüche 1 bis 8, wobei der erste Teil der Schraube und der zweite Teil der Schraube jeweils ferner einen abgewinkelten Kanal (86) umfassen, der parallel zu der Längsachse positioniert ist, wobei die jeweiligen abgewinkelten Kanäle betriebsfähig sind, um den ersten Teil der Schraube mit dem zweiten Teil der Schraube in Eingriff zu bringen und eine Gleitbewegung zwischen dem ersten Teil der Schraube und dem zweiten Teil der Schraube entlang der Längsachse zu ermöglichen und eine relative Drehbewegung um die Längsachse zu verhindern.

9. Vorrichtung nach einem der Ansprüche 1 bis 8, wobei das Kompressionselement (26, 26A) eine Kegelstumpfkonfiguration umfasst, die einen oberen Abschnitt (180, 196), einen zentralen Abschnitt (188, 188A) und einen unteren Abschnitt (184, 204) aufweist, wobei wenigstens der obere Abschnitt und der untere Abschnitt aus einem harten und starren Material hergestellt sind.

10. Vorrichtung nach Anspruch 9, wobei der zentrale Abschnitt (188A) des Kompressionselements ein weiches semikomprimierbares Material umfasst.

11. Vorrichtung nach einem der Ansprüche 1 bis 10, wobei der Ständer (36) ferner Folgendes umfasst:
eine Montageplatte (260), die um das Gewindeelement des zweiten Abschnitts der Schraube herum zwischen dem Kompressionselement und der Mutter koaxial positioniert ist;
eine Stütze (266), die mit der Montageplatte verbunden ist und sich nach unten über das bodenseitige Ende des zweiten Abschnitts der Schraube hinaus erstreckt;
eine Basis (270), die mit der Stütze verbunden ist, die eine Tragoberfläche aufweist, wobei die Tragoberfläche (272) betriebsfähig ist, um das Gewicht entlang der Längsachse zu tragen und zu positionieren, um die Gebrauchslast zu simulieren.

12. Vorrichtung nach Anspruch 11, wobei die Ständerbasis ferner eine Halterung (274) umfasst, die sich axial nach oben in Richtung der Mutter erstreckt, und das Gewicht ferner einen offenen Schlitz (290) umfasst, der betriebsfähig ist, um die Basishalterung aufzunehmen, um eine leichte Verschiebung des Gewichts von der Tragoberfläche im Wesentlichen zu verhindern.

13. Verfahren (400, 400A) zum Simulieren und physikalischen und visuellen Demonstrieren der Auswirkungen variierender Krafteingänge auf eine Verschraubungssimulatorvorrichtung nach Anspruch 1 für Ausbildungszwecke, wobei das Verfahren Folgendes umfasst:
Bereitstellen einer Schraube (14), die einen ersten Teil (48) der Schraube, der einen Kopf (50) beinhaltet, einen zweiten Teil (140) der Schraube, der relativ zu dem ersten Teil der Schraube entlang einer Längsachse (72) axial bewegbar ist, und eine Schraubenvorlastskala (20) aufweist;
Installieren eines Kompressionselements (26, 26A) in anstoßendem Eingriff mit dem Kopf des ersten Teils der Schraube;
gewindemäßiges Ineingriffbringen einer Mutter (28) mit dem zweiten Teil der Schraube;
Ausüben einer axialen Kompressionskraft durch die Mutter auf das Kompressionselement, wobei dadurch der zweite Teil der Schraube relativ zu dem ersten Teil der Schraube entlang der Längsachse axial verschoben wird;
Simulieren einer Schraubenvorlastkraft (32) und einer Klemmlastkraft (30) durch die Ausübung der axialen Kompressionskraft der Mutter; und
visuelles Anzeigen (460, 20) der simulierten Schraubenvorlastkraft auf der Schraubenvorlastskala .

14. Verfahren nach Anspruch 13, wobei der Schritt des Simulierens einer Schraubenvorlastkraft und einer Klemmlastkraft ferner Folgendes umfasst:
Ausüben einer axialen Widerstandskraft gegen die axiale Bewegung des zweiten Teils der Schraube relativ zu dem ersten Teil entlang der Längsachse durch Verbinden einer Vorspannvorrichtung (100) mit dem ersten Teil der Schraube und dem zweiten Teil der Schraube.

15. Verfahren nach einem der Ansprüche 13 bis 14, das ferner die folgenden Schritte umfasst:
Installieren eines Ständers (36) zwischen dem Kompressionselement und der Mutter in Kommunikation mit der Schraube;
Simulieren einer Gebrauchslast (46) auf die Schraube durch den ausgewählten Eingriff eines Gewichts (40) in den Ständer, wobei die Schraubenvorlastskala Änderungen der Schraubenvorlastkraft auf die Schraube als ein Ergebnis der Ausübung der simulierten Gebrauchslast anzeigt.

16. Verfahren nach Anspruch 15, das ferner den Schritt des visuellen Anzeigens umfasst, wenn die Klemmlast bei einem Wert einer Null(0)-Kraft ist, durch Erzeugen einer axialen räumlichen Lücke (304) zwischen dem Ständer und dem Kompressionselement.

17. Verfahren nach einem der Ansprüche 13-16, wobei der Schritt des Installierens eines Kompressionselements ferner den Schritt des Installierens eines harten und starren Kompressionselements (26) oder eines weichen semikomprimierbaren Kompressionselements (26A) umfasst.

## Revendications

1. Dispositif de simulation d'assemblage boulonné (10, 10A) destiné à être utilisé dans la démonstration des effets de conditions variables sur un assemblage boulonné, le dispositif comprenant :
un boulon (14) ayant un axe longitudinal (72) comprenant :
une première partie de boulon (48) ayant une tête (50) ;
une échelle de précharge de boulon (20) ayant des indices de valeur de force de précharge de boulon (68), l'échelle de précharge de boulon pouvant fonctionner pour afficher une force de précharge simulée (32) sur le boulon ;
une seconde partie de boulon (140) ayant une extrémité supérieure (144), une extrémité inférieure (172) et une partie filetée (176) à proximité de l'extrémité inférieure, la seconde partie de boulon étant en prise avec la première partie de boulon et mobile axialement par rapport à la première partie de boulon le long de l'axe longitudinal ; et
un dispositif de sollicitation (100) relié à la première partie de boulon et à la seconde partie de boulon, lors d'un mouvement axial relatif de la première partie de boulon et de la seconde partie de boulon, la valeur de la force de précharge sur le boulon affichée sur l'échelle de précharge changeant de valeur ;
un élément de compression (26, 26A) positionné entre la tête de la première partie de boulon et l'extrémité inférieure de la seconde partie de boulon ;
un écrou (28) en prise par filetage avec la partie filetée de la seconde partie de boulon, l'écrou pouvant fonctionner pour générer sélectivement le mouvement axial relatif entre la première partie de boulon et la seconde partie de boulon pour simuler la force de précharge de boulon et appliquer une force axiale à l'élément de compression le long de l'axe longitudinal pour simuler une charge de serrage (30) sur l'élément de compression ;
un socle (36) positionné en communication avec le boulon entre l'élément de compression et l'écrou ; et
un poids (40) en prise sélectivement avec le socle pouvant fonctionner pour simuler une charge de service (46) sur le boulon.

2. Dispositif selon la revendication 1, l'échelle de précharge de boulon (20) comprenant en outre :
une face avant (64) positionnée sur la première partie de boulon, la face avant ayant les indices de valeur de force de précharge de boulon ;
une ouverture de fenêtre (158) définie par la seconde partie de boulon, l'ouverture de fenêtre pouvant fonctionner pour encadrer une partie des indices de valeur de force de précharge ; et
un indicateur (160) relié à la seconde partie de boulon et positionné dans l'ouverture de fenêtre, l'indicateur pouvant fonctionner pour identifier une valeur de force de précharge simulée actuelle (32) sur les indices de valeur de force d'échelle de précharge de boulon.

3. Dispositif selon l'une quelconque des revendications 1 à 2, le dispositif de sollicitation comprenant en outre un élément de sollicitation (120), l'élément de sollicitation comprenant un ressort de tension ayant une première extrémité (124) et une seconde extrémité (130), la seconde extrémité du ressort de tension étant reliée à la seconde partie de boulon.

4. Dispositif selon la revendication 3, le ressort de tension (120) comprenant une raideur de ressort de 0,2 Newtons/millimètre (N/mm).

5. Dispositif selon l'une quelconque des revendications 3 à 4, le dispositif de sollicitation comprenant en outre un élément fileté allongé (102) ayant une première extrémité (104) et une seconde extrémité (108), la première extrémité de l'élément fileté étant en prise avec la première partie de boulon et la seconde extrémité étant reliée à la première extrémité du ressort, l'élément fileté pouvant fonctionner pour régler sélectivement une tension axiale du ressort de tension le long de l'axe longitudinal.

6. Dispositif selon la revendication 5, la première partie de boulon définissant un alésage axial traversant (70) le long de l'axe longitudinal à partir d'une extrémité inférieure (90) à travers la surface supérieure de tête (54) et la seconde partie de boulon définissant un alésage axial (162) positionné le long de l'axe longitudinal aligné sur l'alésage axial traversant de la première partie de boulon, l'élément fileté allongé étant positionné dans l'alésage axial traversant de la première partie de boulon et le ressort de tension étant positionné dans l'alésage axial de la seconde partie de boulon et une partie de l'alésage axial traversant de la première partie de boulon.

7. Dispositif selon la revendication 6, la tête de première partie de boulon (50) définissant un évidement s'étendant axialement (56) à travers une surface supérieure du boulon en communication avec l'alésage axial traversant de la première partie de boulon, l'élément fileté allongé s'étendant dans l'évidement axial de tête et entrant en prise par filetage avec un écrou de réglage (74), l'écrou de réglage pouvant fonctionner pour régler la tension axiale du ressort de tension le long de l'axe longitudinal.

8. Dispositif selon l'une quelconque des revendications 1 à 8, la première partie de boulon et la seconde partie de boulon comprenant chacune en outre un canal incliné (86) positionné parallèlement à l'axe longitudinal, les canaux inclinés respectifs pouvant fonctionner pour mettre en prise la première partie de boulon avec la seconde partie de boulon et permettre un mouvement de coulissement entre la première partie de boulon et la seconde partie de boulon le long de l'axe longitudinal et empêcher un mouvement de rotation relatif autour de l'axe longitudinal.

9. Dispositif selon l'une quelconque des revendications 1 à 8, l'élément de compression (26, 26A) comprenant une configuration tronconique ayant une partie supérieure (180, 196), une partie centrale (188, 188A) et une partie inférieure (184, 204), au moins la partie supérieure et la partie inférieure étant fabriquées à partir d'un matériau dur et rigide.

10. Dispositif selon la revendication 9, la partie centrale de l'élément de compression (188A) comprenant un matériau souple semi-compressible.

11. Dispositif selon l'une quelconque des revendications 1 à 10, le socle (36) comprenant en outre :
une plaque de montage (260) positionnée coaxialement autour de l'élément fileté de la seconde partie de boulon entre l'élément de compression et l'écrou ;
un support (266) relié à la plaque de montage et s'étendant vers le bas au-delà de l'extrémité inférieure de la seconde partie de boulon ;
une base (270) reliée au support ayant une surface de soutien, la surface de soutien (272) pouvant fonctionner pour soutenir et positionner le poids le long de l'axe longitudinal pour simuler la charge de service.

12. Dispositif selon la revendication 11, la base de socle comprenant en outre un dispositif de retenue (274) s'étendant axialement vers le haut en direction de l'écrou et le poids comprenant en outre une fente ouverte (290) pouvant fonctionner pour recevoir le dispositif de retenue de base pour empêcher sensiblement un déplacement facile du poids depuis la surface de soutien.

13. Procédé (400, 400A) de simulation et de démonstration physique et visuelle des effets d'entrées de force variables sur un dispositif simulateur d'assemblage boulonné selon la revendication 1 destiné à une formation pédagogique, le procédé comprenant :
la fourniture d'un boulon (14) ayant une première partie de boulon (48) comportant une tête (50), une seconde partie de boulon (140) mobile axialement par rapport à la première partie de boulon le long d'un axe longitudinal (72) et une échelle de précharge de boulon (20) ;
l'installation d'un élément de compression (26, 26A) en prise en butée avec la tête de la première partie de boulon ;
la mise en prise par filetage d'un écrou (28) avec la seconde partie de boulon ;
l'application d'une force de compression axiale par l'écrou à l'élément de compression, déplaçant ainsi axialement la seconde partie de boulon par rapport à la première partie de boulon le long de l'axe longitudinal ;
la simulation d'une force de précharge de boulon (32) et d'une force de charge de serrage (30) par l'application de la force de compression axiale de l'écrou ; et
l'affichage visuel (460, 20) de la force de précharge de boulon simulée sur l'échelle de précharge de boulon.

14. Procédé selon la revendication 13, l'étape de simulation d'une force de précharge de boulon et d'une force de charge de serrage comprenant en outre :
l'application d'une force axiale résistante contre le mouvement axial de la seconde partie de boulon par rapport à la première partie le long de l'axe longitudinal en reliant un dispositif de sollicitation (100) à la première partie de boulon et à la seconde partie de boulon.

15. Procédé selon l'une quelconque des revendications 13 à 14 comprenant en outre les étapes suivantes :
l'installation d'un socle (36) entre l'élément de compression et l'écrou en communication avec le boulon ;
la simulation d'une charge de service (46) sur le boulon par une prise sélectionnée d'un poids (40) sur le socle, l'échelle de précharge de boulon affichant des modifications de la force de précharge de boulon sur le boulon suite à l'application de la charge de service simulée.

16. Procédé selon la revendication 15, comprenant en outre l'étape d'affichage visuel lorsque la charge de serrage se trouve à une valeur de force nulle (0) en générant un espace axial spatial (304) entre le socle et l'élément de compression.

17. Procédé selon l'une quelconque des revendications 13 à 16, l'étape d'installation d'un élément de compression comprenant en outre l'étape d'installation soit d'un élément de compression dur et rigide (26), soit d'un élément de compression souple semi-compressible (26A).
